Europäisches Patentamt

European Patent Office

Office européen des brevets

(11) Publication number: **0 310 271**
**A1**

## EUROPEAN PATENT APPLICATION

(21) Application number: **88308629.0**

(22) Date of filing: **16.09.88**

(51) Int. Cl.4: **F16L 11/12 , F16L 58/02**

(30) Priority: **26.09.87 GB 8722666**

(43) Date of publication of application:
**05.04.89 Bulletin 89/14**

(84) Designated Contracting States:
**AT BE DE ES FR GB IT NL SE**

(71) Applicant: **J.H. FENNER & CO. LIMITED**
**Marfleet**
**Hull North Humberside, HU9 5RA(GB)**

(72) Inventor: **Broadhurst, Henry Neville**
**10 Potterdale Drive**
**Little Weighton North Humberside(GB)**
Inventor: **Normanton, Geoffrey**
**90 Ellerker Drive Well Lane**
**Willerby Hull North Humberside(GB)**

(74) Representative: **Ranson, Arthur Terence et al**
**W.P. THOMPSON & CO. Kings Building South**
**Church Side**
**Hull, HU1 1RR(GB)**

(54) **An anti-static non-metallic pipe or fitting.**

(57) A non-metallic pipe or fitting (1), the surface of which is coated or treated with an electrically conductive composition (3). A network of grooves or corrugations (2) is formed in the surface of the pipe or fitting (1). This helps to ensure that even though the pipe or fitting may be subjected to a high degree of surface wear a latticework of electrical conductive paths remain, protected against wear by the ridges of the grooves or corrugations.

Fig 1

EP 0 310 271 A1

## AN ANTI-STATIC NON-METALLIC PIPE OR FITTING

The present invention relates to non-metallic pipes or fittings, and, in particular to non-metallic pipes or fittings which are not subject to the build up of static charges on the surface. The present invention also relates to a method for preventing the build up of static charges on the surface of a section of non-metallic material. The present invention is especially, although not exclusively, applicable to pipes and fittings comprised of uPVC (unplasticised polyvinyl chloride) material.

Pipes and fittings made from non-metallic materials are widely used now in many industries and applications. Unlike metallic pipes and fittings which they are often used to replace, pipes and fittings made from non-metallic materials such as uPVC are resistant to chemical attack from a wide range of materials, have a much greater degree of flexibility and are lighter and easier to handle. However, non-metallic pipes and fittings tend to have a relatively high electrical resistance which makes it virtually impossible to earth each pipe or fitting over its whole surface, and as a consequence, they are prone to build up static charges on the surface. When the potential difference between pipe or fitting and ground reaches a high enough level the static charge discharges to earth through the air, but in doing so it generates a spark. In many applications, such as below ground in a mine, a chemical installation etc., static discharges can result in fires and/or explosions, and as such the wider use of non-metallic pipes and fittings in hazardous environments has been restricted. In this respect, it is difficult to produce some non-metallic materials, for example uPVC, which do not have a high surface resistivity and which are not subject to build up static charges on the surface without detriment to the physical and processing properties of the materials. By way of example, standard uPVC pipes and fittings have a surface resistivity in excess of $1 \times 10^{10}$ ohms, whereas a limit of $3 \times 10^8$ ohms normally applies in underground mining and similar environments.

It is an object of the present invention to provide a non-metallic pipe or fitting which has a relatively low surface resistivity and which is, as a consequence, not subject to a build up of static charges on its surface.

It is a further object of the present invention to provide a non-metallic pipe or fitting in which surface wear does not substantially mitigate the anti-static properties of the pipe or fitting.

According to a first aspect of the present invention there is provided a non-metallic pipe or fitting comprising a surface coating or treatment consisting of an electrically conductive composition.

Preferably, the surface of the pipe or fitting to be coated or treated comprises a plurality of intersecting grooves or corrugations over its surface and the electrically conductive composition is adapted to fill these grooves. Conveniently, the said plurality of intersecting grooves or corrugations are formed by knurling the surface of the pipe or fitting to be coated or treated.

Whereas with a smooth surfaced pipe or fitting there would be nothing to prevent areas of the electrically conductive composition from wearing away completely, leaving them devoid of any anti-static properties, the grooves or corrugations in the surface of the pipe or fitting provide a latticework of electrically conductive paths which are protected against wear by the ridges of the grooves or corrugations.

Preferably, the resistivity of the surface coating is less than $3 \times 10^8$ ohms in accordance with I.S.O. 284/1975 "Conveyor Belts - Electrical Conductivity - Specification and Method of Tests".

The electrically conductive composition may be based upon nitrile latex, nitrile being the common name for acrylonitrile butadiene copolymer. This composition bonds to the surface of a uPVC pipe or fitting, and effectively forms a composite material therewith.

Particularly suited to the application of the present invention is a commercial acrylonitrile butadiene copolymer from BP Chemicals Limited, sold under the trade name Breon 1577 which comprises a third monomer, styrene. Other electrically conductive compositions may, however, be used.

Since nitrile latex, and particularly the Breon 1577 mentioned previously, has a relatively low solid content, other compounds may be added to it as dispersions to achieve various finishes on the pipe or fitting, in addition to that achieved by the nitrile latex alone. A suitable mixture would be as follows:-

|  | Parts (dry material) |
| --- | --- |
| Breon 1577 | 100 |
| Conductive Black | 13 |
| Carboxyl methyl cellulose | 0.42 |

2

The dispersions may be produced by ball-milling for several hours using the following formulation:-

| Black dispersion | Parts |
|---|---|
| Carbon Black | 20 |
| Bevaloid 35 | 2 |
| Sodium Hydroxide (10%) | 1 |
| Water | 77 |

Bevaloid 35 is a trade name for a dispersing agent consisting of a sodium salt of a sulphated napthalene formaldehyde condensate.

After mixing, the dispersions are stirred together with the nitrile latex in a suitable mixer. The resulting mix can then be applied to the surface of the pipe or fitting by painting, spraying or any other appropriate coating technique.

According to a second aspect of the present invention there is provided a method for preventing the build up of static charges on a section of a non-metallic material, wherein the surface of the material is treated with an electrically conductive composition.

Preferably, the surface of the non-metallic material is knurled prior to treatment with the electrically conductive composition.

The electrically conductive composition may be advantageously applied to uPVC pipes and fittings which are in situ and makes it ideally suited for this use on existing installations as there is no need to remove the existing pipework for coating. Moreover, since nitrile latex is known which cures at room temperature there will usually be no need to apply heat.

Where the electrically conductive composition is applied to existing pipework a knurling tool or groove cutting tool may be required to cut grooves or corrugations into the surface of the pipes or fittings to be coated or treated.

A further advantage of the present invention is that nitrile latex can be compounded, so as to be fire resistant.

An embodiment of the present invention will now be described, by way of example, with reference to the accompanying drawings, in which:-

Fig. 1 shows schematically an end section through a uPVC pipe treated in accordance with the present invention for use primarily in an abrasive environment;

Fig. 2 shows a graph of the electrical resistivity characteristics of a uPVC material treated in accordance with the present invention against various levels of surface wear.

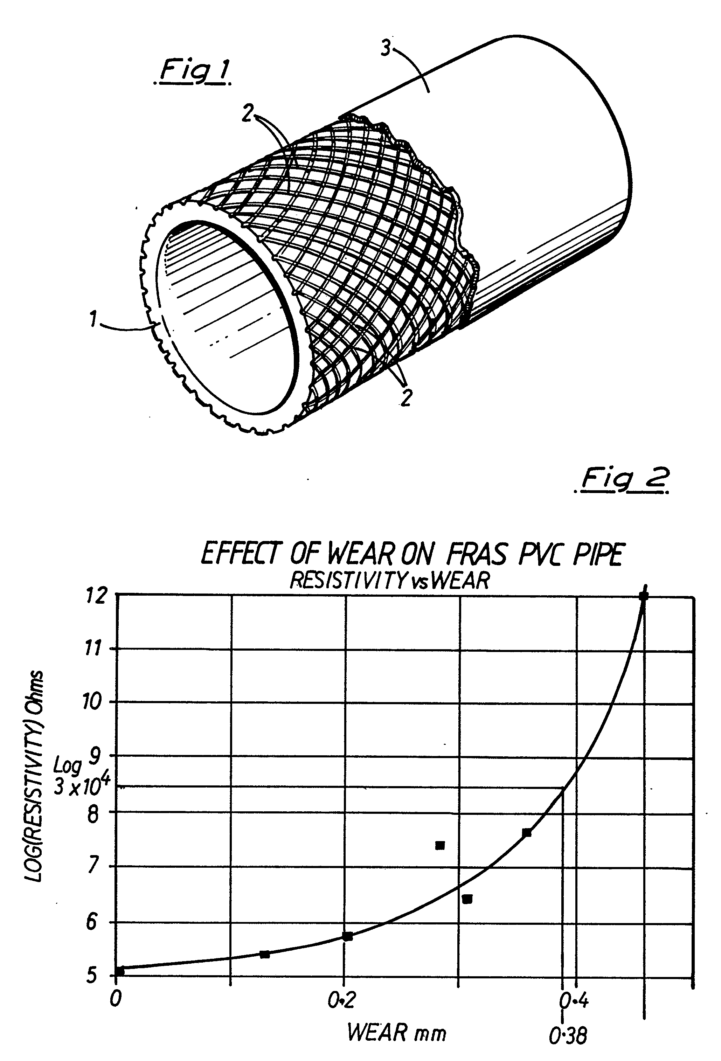

Referring to Fig. 1 there is shown an end section through a uPVC pipe 1, the outer surface of which is covered with a criss-crossed latticework of grooves 2. The outer surface of the uPVC pipe 1 has been treated with an electrically conductive composition 3 comprising an acrylonitrile butadiene polymeric compound,which coats the whole surface of the uPVC pipe and fills the grooves 2. The composition 3 bonds to the outer surface of the uPVC pipe 1 and effectively forms a composite with it. In other words,under normal use,the coating composition 3 cannot be physically separated from the uPVC pipe 1.

The acrylonitrile butadiene polymeric compound is electrically conductive and as such it conducts to earth any static charges which build up in the uPVC pipe 1. The accepted requirement for non-metallic materials in hazardous environments, such as underground mines in the UK and elsewhere, is that the surface resistance under specified conditions (laid down in ISO 284/1975) shall not exceed $3 \times 10^8$ ohms and shall remain so for the working life of the material.

In an abrasive environment the electrically conductive composition is prone to wear away and without protection a situation would soon be reached where it had worn away completely, leaving areas of the uPVC pipe 1 completely devoid of any anti-static properties. The uPVC pipe 1 itself though is,relatively speaking, resistant to wear. By providing grooves 2 in the outer surface of the uPVC pipe 1 protection against wear is afforded to the composition 3 lying within the grooves 2 and a latticework of conductive paths is left over the outer surface of the uPVC pipe 1 which ensures that the anti-static properties are retained.

In a series of tests to prove the principle of the protection of a conductive path against surface abrasion, seven identical sheets of rigid uPVC were prepared, dimensions 200 x 200 x 5.9 mm.

Six of the sheets were grooved in a regular criss-crossed pattern to a depth of 0.46 mm. The sheets were then covered with an anti-static coating bonded to the uPVC surface including the grooves created by the knurling. A typical formulation for the composition is as follows:-

Parts by weight per 100 parts of polymer.

Breon 1577 - Acrylonitrile - butadiene copolymer latex modified with a third co-monomer styrene.     100
Vulcan P. Carbon black - 20% solution in water.     25
Thickener - 2% solution of Blanose 7H4 -carboxyl methyl cellulose -in water.     8

One of the prepared sheets was left intact but the surface of each of the remaining sheets was ground away by known amounts to simulate varying degrees of surface abrasion or wear.

The surface conductivity of all seven sheets was then measured in accordance with I.S.O. 284 "Conveyor Belts -Electrical Conductivity - Specification and Method of Tests".

The results are tabulated below:-

| Surface removed | Resistance Ohms | Log Resistivity |
|---|---|---|
| 0.00 mm | $1.3 \times 10^5$ | 5.114 |
| 0.13 mm | $2.6 \times 10^5$ | 5.415 |
| 0.20 mm | $5.6 \times 10^5$ | 5.750 |
| 0.28 mm | $2.0 \times 10^7$ | 7.400 |
| 0.30 mm | $2.6 \times 10^6$ | 6.420 |
| 0.36 mm | $4.4 \times 10^7$ | 7.644 |
| 0.46 mm | $1 \times 10^{12}$ | 12.000 (all coating removed) |

and illustrated graphically in Fig. 2.

As stated previously, the accepted requirements for non-metallic materials in underground coal mines in the UK and elsewhere is that the surface resistance under specified conditions shall not exceed $3 \times 10^8$ ohms and shall remain so in use.

From the graph of Fig. 2, it can be seen that the resistance of $3 \times 10^8$ ohms is only reached when, on this particular form of grooving, 0.38 mm has been removed amounting to 83% of the depth of the grooves over the whole surface which would be far greater than would be experienced during normal service.

The surface conductivity has thus been maintained by the retention of a conductive path in the base of the grooves.

Without the grooving, the electrically conductive composition would be vulnerable to damage or complete removal, creating an unacceptable hazard when used in potentially explosive atmospheres as are found for example in underground coal mines.

Although it is preferred to provide grooves in the surface of the uPVC pipe or fitting to receive the electrically conductive composition, it should be understood that this is not an essential requirement of the present invention, at least not where the pipe or fitting finds application in a non-abrasive or low wear environment. Here the composition may be applied direct to the surface of a pipe or fitting without grooves in its outer surface and its anti-static properties will not be affected.

## Claims

1. A non-metallic pipe or fitting characterised in that the surface of the pipe or fitting is coated or treated with an electrically conductive composition (3).

2. A non-metallic pipe or fitting according to Claim 1, characterised in that the surface of the pipe or fitting to be coated or treated comprises a plurality of intersecting grooves or corrugations (2) over its surface and the electrically conductive composition (3) is adapted to fill these grooves.

3. A non-metallic pipe or fitting according to Claim 2, characterised in that the said plurality of intersecting grooves or corrugations (2) are formed by knurling the surface of the pipe or fitting to be coated or treated.

4. A non-metallic pipe or fitting according to any preceding claim, characterised in that the resistivity of the surface coating is less than $3 \times 10^8$ ohms.

5. A non-metallic pipe or fitting according to any preceding claim, characterised in that the electrically conductive composition (3) is comprised of nitrile latex.

6. A method for preventing the build up of static charges on a section of a non-metallic material, characterised in that an electrically conductive composition is applied to the said section.

7. A method for preventing the build up of static charges on a section of non-metallic material according to Claim 6, characterised in that the surface of the non-metallic material is knurled prior to treatment with the electrically conductive composition.

8. A method for preventing the build-up of static charges on a section of a non-metallic material according to Claim 6 or 7, characterised in that the electrically conductive composition is applied to PVC pipes or fittings whilst in situ.

EP 0 310 271 A1

_Fig 1_

_Fig 2_

EFFECT OF WEAR ON FRAS PVC PIPE
RESISTIVITY vs WEAR

## DOCUMENTS CONSIDERED TO BE RELEVANT

EP 88308629.0

| Category | Citation of document with indication, where appropriate, of relevant passages | Relevant to claim | CLASSIFICATION OF THE APPLICATION (Int. Cl.4) |
|---|---|---|---|
| Y | <u>DE - A1 - 2 420 753</u> (EHLERS) <br> * Totality * <br> -- | 1,4,6 | F 16 L 11/12 <br> F 16 L 58/02 |
| Y | <u>DE - A - 2 103 394</u> (CONTINENTAL GUMMI WERKE AG) <br> * Totality * <br> -- | 1,4,6 | |
| A | <u>DE - A1 - 2 556 295</u> (WAVIN B.V.) <br> * Totality * <br> -- | 1,6 | |
| A | <u>DE - B - 1 283 615</u> (ATLAS CORP.) <br> * Totality * <br> -- | 1,6 | |
| A | <u>GB - A - 1 467 209</u> (STEWARD PLASTICS INC.) <br> * Totality * <br> ---- | 1,6 | **TECHNICAL FIELDS SEARCHED (Int. Cl.4)** <br><br> F 16 L 11/00 <br> f 16 L 58/00 |

The present search report has been drawn up for all claims

| Place of search | Date of completion of the search | Examiner |
|---|---|---|
| VIENNA | 20-12-1988 | SCHUGANICH |